# FASCICULE DE BREVET EUROPEEN

(11) **EP 4 248 108 B1**
(45) Date de publication et mention de la délivrance du brevet: **23.07.2025**
(21) Numéro de dépôt: 21819932.1
(22) Date de dépôt: 16.11.2021
(51) Int. Cl.: F16H 57/08, F16H 57/023, F16H 1/28, F16H 57/00, F16H 1/46, F16H 57/02, F16D 121/24, F16D 125/40, F16D 131/00, F16D 123/00, F16D 55/226, F16D 125/50, F16H 25/20

(54) **MOTOREDUCTEUR POUR ACTIONNEUR DE FREIN DE VEHICULE A DUREE DE VIE AUGMENTEE**
GETRIEBEMOTOR FÜR EINEN FAHRZEUGBREMSAKTUATOR MIT ERHÖHTER LEBENSDAUER
GEARED MOTOR FOR A VEHICLE BRAKE ACTUATOR WITH INCREASED SERVICE LIFE

(30) Priorité: 20.11.2020 FR 2011960
(43) Date de publication de la demande: 27.09.2023
(73) Titulaire: Hitachi Astemo France, 93700 Drancy (FR)
(72) Inventeur: QUAZUGUEL, Gaëtan, 93500 PANTIN (FR); BERTRAND, Jérôme, 93230 ROMAINVILLE (FR); UMBDENSTOCK, Fabrice, 68970 ILLHAEUSERN (FR); BAZIN, Arnaud, 77100 MEAUX (FR)
(74) Mandataire: Brevalex
(86) Numéro de dépôt international: PCT/FR2021/052020
(87) Numéro de publication internationale: WO 2022/106777

(56) Documents cités:
- KR-B1- 100 819 087
- US-A- 4 804 073
- US-A- 5 679 089

## Description

### DOMAINE TECHNIQUE

La présente invention se rapporte au domaine des freins de véhicule automobile, et plus spécifiquement à un motoréducteur.

### ÉTAT DE LA TECHNIQUE ANTÉRIEURE

Dans le domaine automobile, le freinage consiste à activer le déplacement de segments ou plaquettes portant une garniture de friction pour la presser contre une surface liée en rotation avec la roue pour ralentir ou immobiliser le véhicule.

Dans un frein à disque, le déplacement et la montée en charge de la plaquette contre un disque de freinage, constituant la surface tournante à freiner, est classiquement assuré hydrauliquement par un piston logeant un cylindre formé dans l'étrier et alimenté par un circuit pressurisé sous l'actionnement d'une pédale.

Il est également connu de prévoir un frein à disque incluant un actionneur électromécanique pourvu d'un moteur électrique et un convertisseur de mouvement de type vis-écrou qui convertit la rotation en sortie de moteur en une translation de la plaquette.

En pratique, l'une des difficultés rencontrées dans l'utilisation d'un actionneur électromécanique réside dans la nécessité de convertir une vitesse de rotation élevée associée à un faible couple du moteur électrique, en un faible déplacement avec un effort suffisant. Cette particularité impose de prévoir un réducteur, généralement sous la forme d'un train à engrenages, qui transmet une rotation du moteur, plus précisément une rotation d'un pignon moteur, au convertisseur de mouvement. De manière connue, le moteur et le réducteur sont logés dans un boîtier supporté par l'étrier, formant un groupe dit motoréducteur.

KR 100 819 087 B1 divulgue un motoréducteur d'actionneur électromecanique pour frein de véhicule automobile.

Les ambiances acoustiques au sein de l'habitacle étant devenues particulièrement soignées en réponse à l'exigence des utilisateurs quant à leur confort, il s'agit de réduire au maximum les jeux inter-engrenages et limiter les déplacements relatifs du train à engrenages dans le boîtier qui sont générateurs de bruits sous l'effet des vibrations observées en fonctionnement. A cet égard, il est connu de prévoir que le boîtier forme directement le bâti du train à engrenages. Dans le cas d'un train planétaire comprenant des satellites engrenés dans une couronne extérieure fixe qui les entoure, il s'agit concrètement de former cette couronne extérieure d'un seul tenant avec le corps du boîtier.

En pratique, recourir à cette solution impose une très grande précision de fabrication du boîtier, notamment au niveau de la denture de la couronne, ce qui induit des coûts de production et un taux de rebu élevés. En outre, la résistance mécanique de la denture de la couronne est limitée par celle du matériau du boîtier.

L'invention a pour but de proposer un motoréducteur pour frein de véhicule permettant d'éviter au moins en partie les inconvénients désignés ci-dessus.

### EXPOSÉ DE L'INVENTION

À cet effet, l'invention a pour objet un motoréducteur d'actionneur électromécanique pour frein de véhicule automobile selon la revendication indépendante 1, comprenant un boîtier, un moteur électrique et un réducteur planétaire logé dans le boîtier, le boîtier comprenant une coque qui délimite une chambre, le réducteur planétaire incluant une couronne formant bâti cinématique qui est installée dans la chambre, cette couronne étant délimitée par une surface externe,
caractérisé en ce que le boîtier comprend des languettes qui dépassent de la coque au sein de la chambre de logement de la couronne, la couronne étant maintenue en position par les languettes étant déformées élastiquement par la couronne de sorte à enserrer mutuellement la surface externe par effet de rappel élastique.

L'invention permet ainsi de répondre au moins partiellement au besoin formulé ci-dessus, la couronne étant un élément rapporté au boîtier et dont le verrouillage en position permet d'empêcher la génération de bruit.

L'invention concerne également un procédé de fabrication d'un motoréducteur selon la revendication indépendante 13.

Les revendications dépendantes définissent des modes particuliers de réalisation de l'invention. Un mode particulier de réalisation de l'invention concerne également un motoréducteur ainsi défini, dans lequel le réducteur comporte plusieurs étages planétaires montés en série dans la couronne, la couronne comprenant au moins deux dentures intérieures formées de matériaux distincts et qui coopèrent chacune avec un étage planétaire respectif.

Un mode particulier de réalisation de l'invention concerne également un motoréducteur ainsi défini, dans lequel la couronne est formée de l'association de sous-couronnes incluant chacune au moins une desdites dentures intérieures, dans lequel au moins deux sous-couronnes sont empilées.

Un mode particulier de réalisation de l'invention concerne également un motoréducteur ainsi défini, dans lequel la couronne est formée de l'association de sous-couronnes incluant chacune au moins une desdites dentures intérieures, dans lequel une desdites sous-couronnes est assemblée par emboitement à une autre sous-couronne consécutive.

Un mode particulier de réalisation de l'invention concerne également un motoréducteur ainsi défini, dans lequel la couronne est formée de l'association de sous-couronnes incluant chacune au moins une desdites dentures intérieures, une desdites sous-couronnes étant surmoulée autour d'au moins une autre sous-couronne desdites sous-couronnes.

Un mode particulier de réalisation de l'invention concerne également un actionneur électromécanique pour frein de véhicule automobile comprenant :
- un convertisseur de mouvement de type vis-écrou incluant une vis et un écrou porté par la vis, la vis et l'écrou comprenant chacun un filetage pour coopérer ensemble, et
- un motoréducteur ainsi défini, le moteur entraînant en rotation l'un parmi la vis et l'écrou au moyen du du réducteur planétaire.

Un mode particulier de réalisation de l'invention concerne également un frein de véhicule automobile comprenant une plaquette de frein et un actionneur électromécanique ainsi défini, dans lequel l'élément parmi la vis et l'écrou, qui est entraîné en translation, est prévu pour accompagner dans son déplacement la plaquette de frein pour être sélectivement pressé contre une surface tournante de véhicule à freiner, et écarté de cette surface tournante.

Un mode particulier de réalisation de l'invention concerne également un frein ainsi défini, dans lequel l'actionneur électromécanique est configuré pour assurer un freinage de stationnement et/ou de secours.

Un mode particulier de réalisation de l'invention concerne également un frein ainsi défini, dans lequel l'actionneur électromécanique assure un freinage de service.

Un mode particulier de réalisation de l'invention concerne également un frein ainsi défini, comportant en outre des moyens hydrauliques assurant un freinage de service.

### BRÈVE DESCRIPTION DES DESSINS

[Fig.1] est un schéma en coupe axiale d'un frein à disque comprenant un actionneur électromécanique selon l'invention ;
[Fig.2] est une vue de détail d'un motoréducteur de l'actionneur électromécanique de la figure 1, ce motoréducteur comprenant un boîtier dans lequel est logé un moteur électrique et un réducteur planétaire ;
[Fig.3] est une vue semblable à la figure 2, illustrant seulement le boîtier du motoréducteur ;
[Fig.4] est une vue schématique en perspective illustrant une installation du réducteur dans le boîtier ;
[Fig.5a] est une vue en section partielle du motoréducteur illustrant une couronne du réducteur selon une première variante de l'invention ;
[Fig.5b] est une vue en section partielle du motoréducteur illustrant une couronne du réducteur selon une deuxième variante de l'invention ;
[Fig.5c] est une vue en section partielle du motoréducteur illustrant une couronne du réducteur selon une troisième variante de l'invention ;

### EXPOSÉ DÉTAILLÉ DE MODES DE RÉALISATION PARTICULIERS

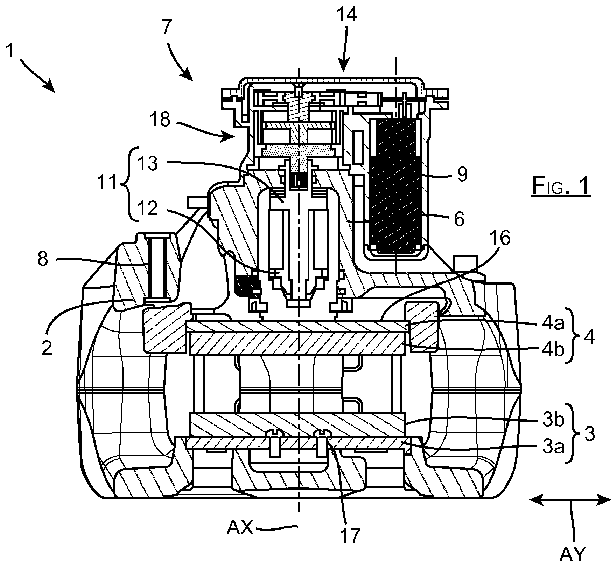

Un frein à disque 1 selon l'invention, représenté sur la figure 1, chevauche un disque de freinage, non visible, qui est une surface tournante rigidement solidaire en rotation à une roue de véhicule. Il comporte une chape 2 fixe qui porte une paire de plaquettes 3 et 4 de part et d'autre du disque, ces plaquettes étant mobiles en translation suivant une direction axiale AX qui est perpendiculaire au plan du disque. Le frein 1 comporte également un étrier 6 et un actionneur électromécanique 7 pour presser les plaquettes contre le disque. Plus particulièrement, l'étrier 6 peut être monté coulissant suivant la direction axiale AX par rapport à la chape 2 par l'intermédiaire de colonnettes 8 axiales dont chacune comporte respectivement une extrémité fixée à l'étrier et un tronçon de guidage prévu pour s'engager dans un alésage correspondant de la chape 2 dans le cas d'un frein à étrier flottant. Toutefois il est bien entendu que la mise en œuvre de frein à étrier fixe ne sort pas du cadre de la présente invention. Avantageusement, le frein selon l'invention comporte un actionneur hydraulique, typiquement un piston hydraulique assurant le freinage de service, le motoréducteur assurant le freinage de parking et/ou de secours.

L'actionneur électromécanique 7 comprend un moteur électrique 9 et un convertisseur de mouvement 11 du type vis-écrou situé à mi-distance des colonnettes 8 dans l'étrier 6. Ce convertisseur de mouvement 11 comporte un écrou 12 et une vis 13 entraînée en rotation par le moteur électrique 9. La mise en rotation de la vis 13 par le moteur électrique s'effectue par l'intermédiaire d'un système de transmission 14. La vis 13, de direction axiale, comprend un filetage mâle qui coopère avec un filetage femelle de l'écrou 12, cet écrou entourant la vis. En particulier, dans l'exemple de la figure 1, la vis 13 est fixe en translation tandis que l'écrou est bloqué en rotation et libre de translater selon AX.

L'écrou 12 est prévu pour accompagner dans son déplacement la plaquette 4 qui se situe dans son prolongement axial, cette plaquette 4 portant la dénomination usuelle de plaquette intérieure, par opposition avec l'autre plaquette 3 dite extérieure étant située de l'autre côté du disque de celui où se situe le convertisseur 11.

Plus spécifiquement, la plaquette intérieure 4 s'étend suivant une direction transversale notée AY, tangentielle au disque, et comprend un support 4a auquel est fixée une garniture de friction 4b orientée axialement vers le disque. Le support 4a présente notamment une face axiale 16 qui est opposée à la garniture 4b et sur laquelle est en appui direct, ou indirect comme dans l'exemple de la figure 1, l'écrou 12 pour presser cette garniture 4b contre le disque. Dans l'exemple avantageux illustré, l'écrou 12 pousse sur la plaquette par l'intermédiaire d'un piston hydraulique. La plaquette extérieure 3, qui s'étend de la même manière suivant AY, comprend un support 3a, à titre non limitatif maintenu à l'étrier 6 par l'intermédiaire de visseries repérées par 17, qui porte une garniture de friction 6b orientée vers le disque. Les plaquettes 3 et 4 sont avantageusement guidées en translation par la chape 2 selon l'axe AX et sont arrêtées tangentiellement par la chape 2 selon la direction AY.

Le système de transmission 14 de l'actionneur électromécanique 7 comporte un réducteur 18 qui assure une démultiplication de la vitesse de rotation relevée en sortie du moteur électrique 9 pour assurer un effort presseur admissible de l'écrou contre le disque par rotation de la vis 13. Dans l'exemple des figures, ce réducteur 18 se présente sous la forme d'un train planétaire bi-étagé. Cette particularité de conception multi-étagée, à savoir un train comprenant une couronne creuse fixe dans laquelle sont disposés, en série, plusieurs étages planétaires, est particulièrement avantageuse en ce qu'elle permet de nombreuses possibilités de démultiplication tout en conservant un réducteur compact.

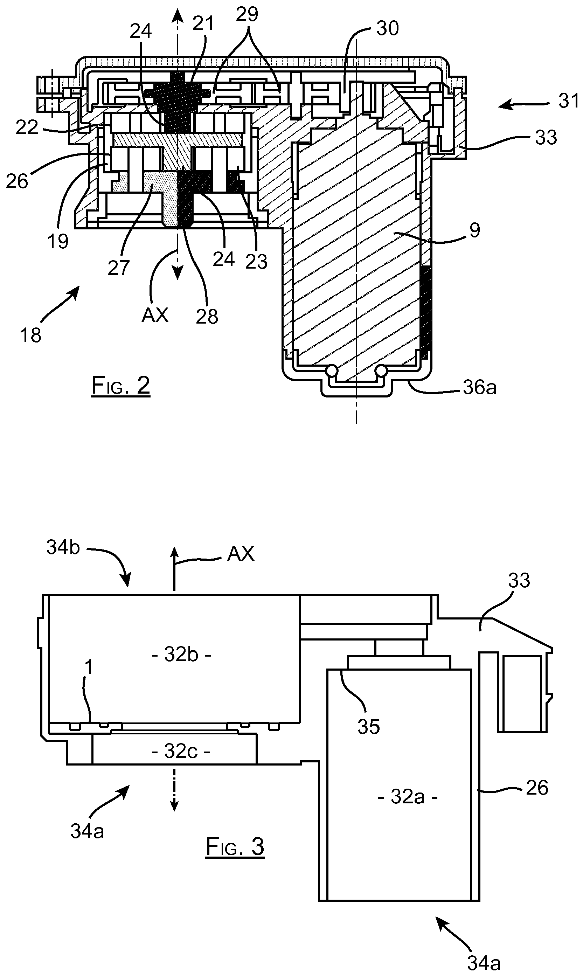

Comme visible plus en détail sur la figure 2, ce réducteur 18 comporte une couronne 19 formant bâti cinématique, à savoir qui est fixe en fonctionnement, et un planétaire d'entrée 21 qui engrène une première rangée de satellites 22. Les satellites 22 de la première rangée engrènent une denture intérieure 20 de la couronne 19 en étant portés par un premier porte-satellites 23, ce premier porte-satellites 23 étant prolongé suivant son axe de rotation, correspondant à l'axe du planétaire d'entrée 21, par un premier pignon planétaire 24. Ce pignon planétaire 24 engrène une deuxième rangée de satellites 26 qui engrènent également dans le même temps la denture 20 de couronne 19. Cette deuxième rangée de satellites 26 est portée par un deuxième porte-satellites 27 qui est prolongé suivant son axe de rotation, coaxial avec l'axe de rotation du premier porte-satellites 23, par un deuxième pignon planétaire 28. Ce deuxième pignon planétaire 28 constitue la sortie du réducteur 18.

Le système de transmission 14 inclut également une cascade d'engrenages 29, qui transmettent la rotation d'un pignon moteur 30, entraîné directement par le moteur électrique 9, au planétaire d'entrée 21.

Le moteur électrique 9 et le système de transmission 14 sont logés dans un boîtier 31 qui est fixé à l'étrier 6. L'association du boîtier 31, du moteur 9 et du système de transmission 14 porte la dénomination usuelle de motoréducteur. Le boîtier 31 délimite en son sein trois chambres, repérées respectivement par 32a, 32b, 32c sur la figure 3, qui sont communicantes et s'étendent parallèlement. En particulier, les deuxième et troisième chambres 32b, 32c s'étendent coaxialement, en étant décalées de la première chambre 32a. Ce boîtier comporte une coque 33 présentant des première, deuxième et troisième ouvertures 34a, 34b, 34c et des premier et deuxième couvercles 36a, 36b verrouillant la première et la deuxième ouverture respectivement. La première ouverture 34a donne accès directement à la première chambre 32a depuis l'extérieur du boîtier, la deuxième ouverture 34b donne un accès direct sur la deuxième chambre 32b depuis l'extérieur du boîtier et, de la même manière, la troisième ouverture 34c donne accès directement sur la troisième chambre 32c depuis l'extérieur du boîtier.

Le moteur électrique 9 est intégré dans la première chambre 32a en étant inséré par la première ouverture 34a jusqu'à venir en buté par une surface de fond de cette première chambre, repérée par 35. Le moteur 9 est ensuite maintenu en position dans la première chambre 32a par le premier couvercle 36a. En pratique, la morphologie de la première chambre 32a correspond au négatif du contour du moteur électrique 9 afin de limiter tout déplacement de ce dernier.

Une particularité du motoréducteur selon l'invention réside dans l'assemblage du réducteur 18 au boîtier 31, et plus spécifiquement dans l'intégration de la couronne 19 qui est un élément rapporté au boîtier.

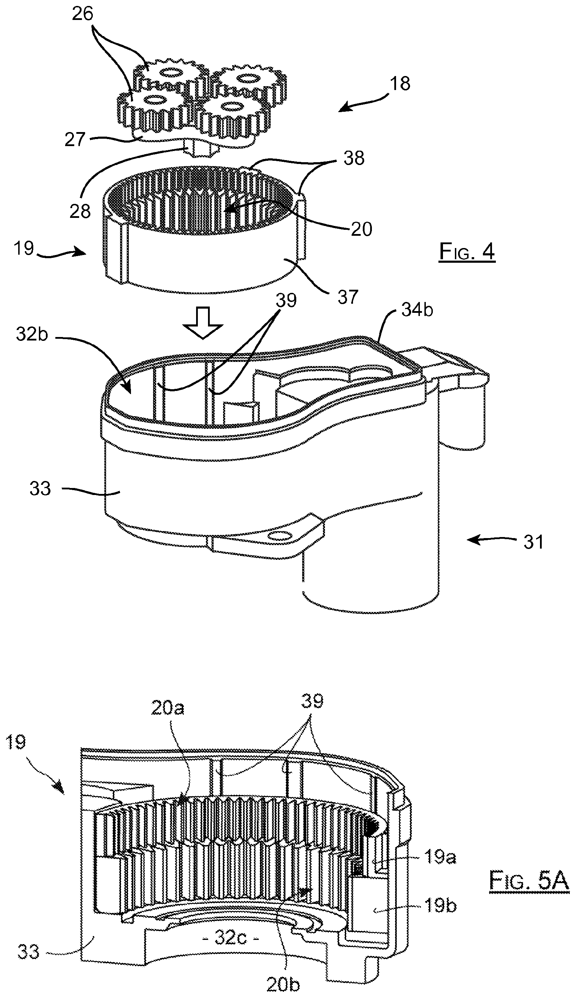

En référence à la figure 4, le réducteur bi-étagé 18, dont seul le deuxième porte-satellites 27 et la deuxième rangée de satellites 26 sont visibles, est installé principalement dans la deuxième chambre 32b du boîtier en passant au travers de la deuxième ouverture 34b du boîtier qui est dimensionnée à cet effet. La couronne présente sur sa surface externe, notée 37, des ergots 38. Ces ergots 38 s'étendent suivant la direction d'insertion du réducteur 18, repérée par la flèche T, dans la deuxième chambre 32b. Les ergots sont distribués à distances les uns des autres et s'engagent chacun dans une rainure correspondante formée dans la coque 33 de sorte à bloquer la couronne en rotation dans le boîtier par correspondance de forme. En variante, au moins un des ergots 38 est configuré pour déformer élastiquement la coque 33 pour retenir la couronne 19 relativement à la coque 33. Dans ce cas, chaque ergot 38 est de préférence configuré pour déformer élastiquement la coque 33 pour retenir la couronne 19 relativement à la coque 33.

Afin de limiter les déplacements de la couronne 19 sous l'effet des vibrations générées en fonctionnement du réducteur 18, l'invention prévoit que le boîtier 31 soit pourvu de languettes 39 dépassant de la paroi de coque 33 délimitant la deuxième chambre 32b. Les languettes 39 sont distribuées à distance les unes des autres, et avantageusement espacées consécutivement d'un pas régulier. L'étendue radiale des languettes 39 par rapport à l'axe du réducteur 18 est fixée de sorte qu'un cercle imaginaire reliant les extrémités de languettes présente un diamètre qui est légèrement inférieur au diamètre mesuré de la couronne au niveau de sa surface externe 37. Avec cet arrangement, il est visé par l'invention qu'une insertion de la couronne 19 dans la deuxième chambre 32b soit rendu possible moyennant un emmanchement en force, ce qui a pour conséquence d'écraser radialement les languettes 39. En particulier, il est requis que cette déformation par écrasement des languettes 39 soit réalisée dans le domaine élastique, et non pas plastique, de sorte que les languettes 39 enserrent mutuellement la surface externe 37 sous l'effet du rappel élastique. Autrement dit, il est prévu que les languettes 39 soient conformées de manière à être contraintes par l'installation de la couronne 19. Un verrouillage en position de la couronne par rapport au boîtier 31 est ainsi obtenu sous l'effet de la résultante de l'ensemble des pressions appliquées par ces languettes 39 contre la surface externe 37 de couronne en cherchant à retrouver leur forme initiale. Il s'ensuit qu'un bruit de cliquetis n'est pas observé, ce bruit étant classiquement généré lorsque la couronne est apte à se déplacer de manière inopinée en butant contre le boîtier 31 dû à des vibrations parasites du motoréducteur nécessairement générées en fonctionnement. En pratique, le matériau à partir duquel est formé le boîtier, ainsi que le dimensionnement des languettes 39, sont spécifiquement définis pour assurer une déformation élastique de ces languettes à l'issue de l'installation de la couronne 19.

Par ailleurs, la couronne 19 étant un élément fabriqué indépendamment du boîtier 31, il est envisagé de fabriquer ce boîtier suivant un modèle dit standard dont les languettes 39, formées d'un seul tenant avec la coque 33, présentent une longueur radiale propre à être usinée au juste besoin en fonction du diamètre de la couronne que l'on souhaite intégrer. En pratique, la longueur radiale des languettes 39, qui sont accessibles facilement depuis la deuxième ouverture 34b du boîtier 31 et dont la structure est peu complexe, peut être aisément reprise durant une étape de finition, par exemple par toilage, à partir d'un brut de fabrication de la coque 33 fabriqué par moulage. Le boîtier standard est ainsi éligible à recevoir une large gamme de réducteurs planétaires présentant différents diamètres de couronnes en fonction de la démultiplication de vitesse de rotation demandée en entrée du convertisseur de mouvement 11. Il est compris ici que le développement et fabrication d'un boîtier standard en grande série est particulièrement intéressant, en comparaison avec le développement et la formation de différents boîtiers en petites séries pour des applications données, à savoir lorsque la couronne est formée d'un seul tenant avec le boîtier dans le cas contraire à celui de l'invention.

Dans l'exemple de la figure 1, le deuxième pignon planétaire 28, qui constitue la sortie du réducteur 18, dépasse hors de la deuxième chambre 32b pour s'étendre au sein de la troisième chambre 32c, et le boîtier 31 est fixé à l'étrier 6 en étant disposé de manière à ce que cette troisième chambre 32c s'étende coaxialement avec la vis 13. Avec cet arrangement, le deuxième pignon planétaire 28, qui est accessible depuis l'ouverture 34c associée à la troisième chambre 32c, peut être rendu solidaire de la vis 13 pour lui transmettre sa rotation. Un autre aspect de l'invention, qui découle directement du fait que la couronne 19 est fabriquée indépendamment du boîtier 31, réside dans une optimisation au juste besoin des matériaux la constituant en fonction de la démultiplication adoptée.

Les engrenages peuvent être sujets à de nombreuses avaries dont les origines peuvent être multiples. Les avaries telles que les piqûres, de l'anglais « pitting », et la fatigue de flexion, sont des cas de préoccupation majeure dans les procédures de conception. En effet, elles entrainent la rupture de toute ou partie d'une dent, jusqu'à aboutir à la ruine de l'engrenage. Au contraire, l'avarie d'usure abrasive, caractérisée par des enlèvements de matière au niveau des différents contacts entre dentures, suscite moins d'intérêt en dépit de ses répercussions progressives sur les performances et la durabilité des transmissions mécaniques du fait des écarts de forme.

A cet égard, la couronne est usuellement fabriquée en un matériau qui permet au mieux de limiter l'usure abrasive dans une gamme de matériaux présentant uniquement une limite d'endurance à la pression et une limite élastique qui sont suffisantes pour se prémunir de l'apparition des piqûres et de la fatigue de flexion.

Afin d'augmenter le spectre de matériaux éligibles pour former la couronne 19, il est prévu selon l'invention de décomposer la denture 20, en deux sous-dentures assemblées. Entendu que les efforts appliqués à la denture 20 de couronne 19 sont différents d'un étage planétaire à l'autre, et plus spécifiquement sont augmentés à mesure que s'additionnent les réductions opérées à chaque étage jusqu'à la sortie du réducteur, il est compris que cette décomposition permet de fixer le matériau de chaque sous-denture au juste besoin, en fonction des charges maximales qui leur sont associées. Comme il est compris, cette spécificité de réalisation ajoute un caractère modulable de la couronne 19, de sorte que sa durée de vie globale, et donc du réducteur 18, s'en retrouve augmentée par l'utilisation du matériau le plus judicieux pour former les sous-dentures en fonction de leur emplacement de destination.

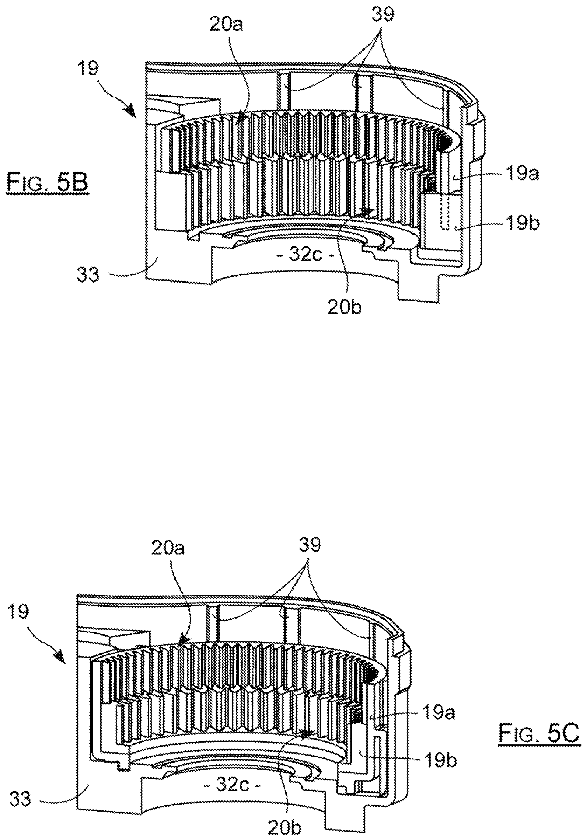

Selon une première variante de réalisation de la couronne 19 du réducteur 18 bi-étagé de la figure 1, l'invention prévoit qu'elle soit issue de l'association d'une première et une deuxième demi-couronne 19a, 19b empilées, comme représenté sur la figure 5. La première demi-couronne 19a est engrenée par les satellites 22 du premier étage de réduction, tandis que la deuxième couronne 19b est engrenée par les satellites 26 du deuxième étage de réduction. Ces demi-couronnes 19a, 19b comprennent chacune une sous-denture intérieure 20a, 20b. Les demi-couronnes 19a, 19b peuvent être rendues solidaires ensemble par collage, ou tout autre moyen de solidarisation, ou simplement maintenues en appui-plan en bloquant tout déplacement axial relatif et d'ensemble par l'ajout de butées. Les surfaces externes des deux demi-couronnes 19a, 19b définissent conjointement la surface externe 37 de couronne à partir de laquelle dépassent les ergots 38 bloquant tout déplacement radial, et les sous-dentures 20a, 20b forment conjointement la denture 20 de couronne 19. Il est à noter que la force de rappel élastique des languettes 39 est avantageusement suffisante pour empêcher les deux demi-couronnes de se déplacer axialement de manière inopinée sous l'effet des vibrations.

Comme il est compris, la sous-denture 20b de la deuxième demi-couronne 19b est davantage sollicitée que la sous-denture 20a de la première demi-couronne 19a. Ces première et deuxième demi-couronnes sont ainsi avantageusement formées indépendamment l'une de l'autre avant d'être associées pour former la couronne 19, l'une étant fabriquée dans un premier matériau, tandis que l'autre est formée dans un second matériau différent du premier. A titre d'exemple non limitatif, une demi-couronne peut être réalisée en plastique, tandis que l'autre demi-couronne peut être réalisée en métal.

Une deuxième variante de réalisation se distingue de la première variante en ce que les deux demi-couronnes, repérées par 20a', 20b' sur la figure 5b, sont emboitées ensemble. Plus spécifiquement, la deuxième demi-couronne 20b' est pourvue d'une rainure circonférentielle, illustrée en pointillé sur la figure, ouverte sur la première demi-couronne 20a'. Complémentairement la première demi-couronne 20a' est pourvue d'une jupe circonférentielle qui s'engage dans la rainure.

Selon une troisième variante illustrée sur la figure 5c, la première demi-couronne 19a" est surmoulée autour de la deuxième demi-couronne 19b". En particulier, cette troisième variante se distingue en ce que la surface externe 37 de la couronne 19 correspond à la surface externe de la première demi-couronne 19a".

Dans l'exemple des figures, le réducteur 18 se présente sous la forme d'un train planétaire bi-étagé, mais l'invention n'est pas limitée à cet arrangement particulier, et permet toute autre configuration de réducteur dès lors qu'il comprend une couronne extérieure fixe formant bâti cinématique. De la même manière, l'invention n'est pas limitée à la morphologie du boîtier illustré sur les figures, dès lors qu'il comprend une ouverture d'insertion de la couronne qui est maintenue en position par retour élastique de languettes formées dans ce boîtier. En pratique, le réducteur peut présenter plus de deux étages de réduction, à savoir dont la couronne comporte une pluralité de sous-dentures intérieures, et dont au moins deux sous-dentures sont fabriquées à partir de matériaux différents pour être associées à des étages différents de réduction.

Par ailleurs, le frein 1 a été expliqué comme se rapportant à un frein à disque, mais le motoréducteur selon l'invention est applicable à tout autre type de frein, comme un frein à tambour, pour transmettre une rotation de son moteur électrique à un convertisseur de mouvement qui presse au moins une plaquette, d'appellation segment dans ce cas de figure, contre la face interne cylindrique d'un tambour. En pratique, l'actionneur électromécanique 7 peut être utilisé pour assurer un freinage adapté pour freiner le véhicule en service, ou encore assurer un frein dit de « parking » ou encore de secours.

Enfin, cet actionneur électromécanique 7 a été décrit comme comprenant un convertisseur de mouvement 11 de type vis-écrou dans lequel la vis 13 est fixe en translation tandis que l'écrou est fixe en rotation 12. L'invention n'est cependant pas limitée à cette particularité, et permet un arrangement inverse, à savoir dans lequel c'est la vis qui se déplace en réponse à une rotation de l'écrou 12 pour emporter dans son déplacement la plaquette intérieure 4.

## Revendications

1. Motoréducteur d'actionneur électromécanique (7) pour frein de véhicule automobile (1), comprenant un boîtier (31), un moteur électrique (9) et un réducteur planétaire (18) logé dans le boîtier, le boîtier (31) comprenant une coque (33) qui délimite une chambre (32b), le réducteur planétaire (18) incluant une couronne (19) formant bâti cinématique qui est installée dans la chambre (32b), cette couronne étant délimitée par une surface externe (37),
**caractérisé en ce que** le boitier (31) comprend des languettes (39) qui dépassent de la coque (33) au sein de la chambre (32b) de logement de la couronne (19), la couronne (19) étant maintenue en position par les languettes (39) étant déformées élastiquement par la couronne (19) de sorte à enserrer mutuellement sa surface externe (37) par effet de rappel élastique.

2. Motoréducteur selon la revendication 1, dans lequel les languettes (39) limitent un déplacement de la couronne (19) sous l'effet de vibrations lors du fonctionnement du motoréducteur (1).

3. Motoréducteur selon l'une quelconque des revendications précédentes, dans lequel le motoréducteur comprend un moyen de blocage en rotation de la couronne (19) relativement à la coque (33),
le moyen de blocage en rotation de la couronne (19) comprenant de préférence au moins un ergot et au moins une rainure engageant mécaniquement l'ergot.

4. Motoréducteur selon l'une quelconque des revendications précédentes, dans lequel le réducteur planétaire (18) comporte plusieurs étages planétaires montés en série dans la couronne (19), la couronne comprenant au moins deux dentures intérieures (19a, 19b) formées de matériaux distincts et qui coopèrent chacune avec un étage planétaire respectif.

5. Motoréducteur selon la revendication précédente, dans lequel la couronne est formée de l'association de sous-couronnes (19a, 19b) incluant chacune au moins une desdites dentures intérieures (20a, 20b), dans lequel au moins deux sous-couronnes sont empilées.

6. Motoréducteur selon la revendication 4, dans lequel le motoréducteur comprend une couronne qui est formée de l'association de sous-couronnes (19a, 19b) incluant chacune au moins une desdites dentures intérieures (20a, 20b), les sous-couronnes (19a, 19b) étant fixées l'une à l'autre par un moyen de solidarisation,
les sous-couronnes (19a, 19nb) étant notamment fixées l'une à l'autre au moins partiellement par collage et/ou le moyen de solidarisation comprenant au moins une butée axiale de la couronne relativement à la coque (33).

7. Motoréducteur selon l'une quelconque des revendications précédentes, dans lequel la couronne (19) est formée de l'association de sous-couronnes (19a, 19b) incluant chacune au moins une desdites dentures intérieures (20a, 20b), dans lequel une desdites sous-couronnes est assemblée par emboitement à une autre sous-couronne consécutive.

8. Motoréducteur selon la revendication 4, dans lequel la couronne (19) est formée de l'association de sous-couronnes (19a, 19b) incluant chacune au moins une desdites dentures intérieures (20a, 20b), une desdites sous-couronnes étant surmoulée autour d'au moins une autre sous-couronne desdites sous-couronnes.

9. Actionneur électromécanique (7) pour frein de véhicule automobile comprenant :
- un convertisseur de mouvement (11) de type vis-écrou incluant une vis (13) et un écrou (12) porté par la vis, la vis (13) et l'écrou (12) comprenant chacun un filetage pour coopérer ensemble, et
- un motoréducteur selon l'une quelconque des revendications précédentes, le moteur électrique (9) entraînant en rotation l'un parmi la vis (13) et l'écrou (12) au moyen du réducteur planétaire (18).

10. Frein de véhicule automobile (1) comprenant une plaquette de frein (4) et un actionneur électromécanique (7) selon la revendication 9, dans lequel l'élément parmi la vis et l'écrou, qui est entraîné en translation, est prévu pour accompagner dans son déplacement la plaquette de frein (4) pour être sélectivement pressé contre une surface tournante de véhicule à freiner, et écarté de cette surface tournante.

11. Frein selon la revendication 10, dans lequel l'actionneur électromécanique (7) est configuré pour assurer un freinage de stationnement et/ou de secours, et/ou
dans lequel l'actionneur électromécanique (7) est configuré pour assurer un freinage de service.

12. Frein selon l'une quelconque des revendications 10 et 11, dans lequel le frein comporte en outre des moyens hydrauliques assurant un freinage de service.

13. Procédé de fabrication d'un motoréducteur selon l'une quelconque des revendications 1 à 8 ou d'un frein selon l'une quelconque des revendications 10 à 12, comprenant une étape d'insertion de la couronne (19) dans la coque (33), les languettes (39) étant déformées élastiquement par la couronne (19) de sorte à enserrer mutuellement sa surface externe (37) par effet de rappel élastique.

14. Procédé de fabrication d'un motoréducteur selon la revendication précédente, comprenant l'insertion de la couronne (19) dans la coque (33) par emmanchement en force en écrasant radialement les languettes (39).

## Patentansprüche

1. Getriebemotor mit einem elektromechanischen Stellglied (7) für eine Kraftfahrzeugbremse (1), umfassend ein Gehäuse (31), einen Elektromotor (9) und ein Planetengetriebe (18), das im Gehäuse untergebracht ist, wobei das Gehäuse (31) eine Schale (33) umfasst, die eine Kammer (32b) begrenzt, wobei das Planetengetriebe (18) ein Hohlrad (19) beinhaltet, das ein kinematisches Gestell bildet, das in der Kammer (32b) eingebaut ist, wobei das Hohlrad durch eine Außenfläche (37) begrenzt ist,
**dadurch gekennzeichnet, dass** das Gehäuse (31) Laschen (39) umfasst, die innerhalb der Aufnahmekammer (32b) für das Hohlrad (19) aus der Schale (33) herausragen, wobei das Hohlrad (19) durch die Laschen (39) in Position gehalten wird, die vom Hohlrad (19) elastisch verformt werden, so dass sie ihre Außenfläche (37) durch die elastische Rückstellwirkung gegenseitig einklemmen.

2. Getriebemotor nach Anspruch 1, wobei die Laschen (39) eine Bewegung des Hohlrads (19) unter der Wirkung von Vibrationen beim Betrieb des Getriebemotors (1) begrenzen.

3. Getriebemotor nach einem der vorhergehenden Ansprüche, wobei der Getriebemotor ein Mittel zum Blockieren der Drehung des Hohlrads (19) relativ zur Schale (33) umfasst,
wobei das Mittel zum Blockieren der Drehung des Hohlrads (19) vorzugsweise mindestens einen Zapfen und mindestens eine Nut umfasst, die mechanisch mit dem Zapfen in Eingriff kommt.

4. Getriebemotor nach einem der vorhergehenden Ansprüche, wobei das Planetengetriebe (18) mehrere Planetenstufen aufweist, die in Reihe im Hohlrad (19) montiert sind, wobei das Hohlrad mindestens zwei Innenverzahnungen (19a, 19b) umfasst, die aus unterschiedlichen Materialien gebildet sind und jeweils mit einer jeweiligen Planetenstufe zusammenwirken.

5. Getriebemotor nach dem vorhergehenden Anspruch, wobei das Hohlrad aus der Kombination von Teilhohlrädern (19a, 19b) gebildet ist, die jeweils mindestens eine der Innenverzahnungen (20a, 20b) einschließen, wobei mindestens zwei Teilhohlräder gestapelt sind.

6. Getriebemotor nach Anspruch 4, wobei der Getriebemotor ein Hohlrad umfasst, das aus der Kombination von Teilhohlrädern (19a, 19b) gebildet ist, die jeweils mindestens eine der Innenverzahnungen (20a, 20b) einschließen, wobei die Teilhohlräder (19a, 19b) durch ein Verbindungsmittel miteinander befestigt sind,
wobei die Teilhohlräder (19a, 19nb) insbesondere mindestens teilweise durch Kleben aneinander befestigt sind und/oder das Verbindungsmittel mindestens einen axialen Anschlag des Hohlrads relativ zur Schale (33) umfasst.

7. Getriebemotor nach einem der vorhergehenden Ansprüche, wobei das Hohlrad (19) aus der Kombination von Teilhohlrädern (19a, 19b) gebildet ist, die jeweils mindestens eine der Innenverzahnungen (20a, 20b) einschließen, wobei eines der Teilhohlräder durch Verschachteln mit einem anderen, nachfolgenden Teilhohlrad verbunden ist.

8. Getriebemotor nach Anspruch 4, wobei das Hohlrad (19) aus der Kombination von Teilhohlrädern (19a, 19b) gebildet ist, die jeweils mindestens eine der Innenverzahnungen (20a, 20b) einschließen, wobei eines der Teilhohlräder um mindestens ein anderes Teilhohlrad der Teilhohlräder herum geformt ist.

9. Elektromechanisches Stellglied (7) für eine Kraftfahrzeugbremse, umfassend:
- einen Bewegungswandler (11) vom Schrauben-Mutter-Typ, der eine Schraube (13) und eine von der Schraube getragene Mutter (12) einschließt, wobei die Schraube (13) und die Mutter (12) jeweils ein Gewinde zum Zusammenwirken umfassen, und
- einen Getriebemotor nach einem der vorhergehenden Ansprüche, wobei der Elektromotor (9) eine von der Schraube (13) und der Mutter (12) mittels des Planetengetriebes (18) in Drehung antreibt.

10. Kraftfahrzeugbremse (1), umfassend einen Bremsbelag (4) und ein elektromechanisches Stellglied (7) nach Anspruch 9, wobei das Element unter der Schraube und der Mutter, das in Translation angetrieben wird, vorgesehen ist, um den Bremsbelag (4) in seiner Bewegung zu begleiten, um selektiv gegen eine Drehfläche des zu bremsenden Fahrzeugs gedrückt und von dieser Drehfläche wegbewegt zu werden.

11. Bremse nach Anspruch 10, wobei das elektromechanische Stellglied (7) so eingerichtet ist, dass es eine Feststell- und/oder Notbremsung sicherstellt, und/oder
wobei das elektromechanische Stellglied (7) so eingerichtet ist, dass es eine Betriebsbremsung sicherstellt.

12. Bremse nach einem der Ansprüche 10 und 11, wobei die Bremse ferner hydraulische Mittel aufweist, die eine Betriebsbremsung gewährleisten.

13. Verfahren zum Herstellen eines Getriebemotors nach einem der Ansprüche 1 bis 8 oder einer Bremse nach einem der Ansprüche 10 bis 12, umfassend einen Schritt des Einsetzens des Hohlrads (19) in die Schale (33), wobei die Laschen (39) von dem Hohlrad (19) elastisch verformt werden, so dass sie ihre Außenfläche (37) durch die elastische Rückstellwirkung gegenseitig einklemmen.

14. Verfahren zum Herstellen eines Getriebemotors nach dem vorhergehenden Anspruch, umfassend das Einsetzen des Hohlrads (19) in die Schale (33) durch Krafteinpressen durch radiales Quetschen der Laschen (39).

## Claims

1. A geared motor for an electromechanical actuator (7) for a motor vehicle brake (1), comprising a casing (31), an electric motor (9) and a planetary reduction gear (18) housed in the casing, the casing (31) comprising a shell (33) which delimits a chamber (32b), the planetary reduction gear (18) comprising a ring gear (19) forming a kinematic rack which is installed in the chamber (32b), this ring gear being delimited by an outer surface (37),
**characterised in that** the casing (31) comprises tabs (39) which protrude from the shell (33) within the chamber (32b) for housing the ring gear (19), the ring gear (19) being held in position by the tabs (39) being elastically deformed by the ring gear (19) so as to mutually clamp its outer surface (37) by an elastic return effect.

2. The geared motor according to claim 1, wherein the tabs (39) limit a movement of the ring gear (19) under the effect of vibrations during the operation of the geared motor (1).

3. The geared motor according to any one of the preceding claims, wherein the geared motor comprises a means for locking the ring gear (19) in rotation relative to the shell (33),
the means for locking the ring gear (19) in rotation preferably comprising at least one lug and at least one groove mechanically engaging the lug.

4. The geared motor according to any one of the preceding claims, wherein the planetary reduction gear (18) comprises several planetary stages mounted in series in the ring gear (19), the ring gear comprising at least two internal teeth (19a, 19b) formed of different materials and each cooperating with a respective planetary stage.

5. The geared motor according to the preceding claim, wherein the ring gear is formed of the combination of sub-ring gears (19a, 19b) each including at least one of said internal teeth (20a, 20b), wherein at least two sub-ring gears are stacked.

6. The geared motor according to claim 4, wherein the geared motor comprises a ring gear which is formed of the combination of sub-ring gears (19a, 19b) each including at least one of said internal teeth (20a, 20b), the sub-ring gears (19a, 19b) being attached to each other by a securing means,
the sub-ring gears (19a, 19nb) being particularly attached to each other at least partially by bonding and/or the securing means comprising at least one axial stop of the ring gear relative to the shell (33).

7. The geared motor according to any one of the preceding claims, wherein the ring gear (19) is formed of the combination of sub-ring gears (19a, 19b) each including at least one of said internal teeth (20a, 20b), wherein one of said sub-ring gears is assembled by interlocking with another consecutive sub-ring gear.

8. The geared motor according to claim 4, wherein the ring gear (19) is formed of the combination of sub-ring gears (19a, 19b) each including at least one of said internal teeth (20a, 20b), one of said sub-ring gears being overmoulded around at least one other sub-ring gear of said sub-ring gears.

9. An electromechanical actuator (7) for a motor vehicle brake comprising:
- a screw-nut type motion converter (11) including a screw (13) and a nut (12) borne by the screw, the screw (13) and the nut (12) each comprising a thread to cooperate together, and
- a geared motor according to any one of the preceding claims, the electric motor (9) rotating one from the screw (13) and the nut (12) by means of the planetary reduction gear (18).

10. A motor vehicle brake (1) comprising a brake pad (4) and an electromechanical actuator (7) according to claim 9, wherein the element from the screw and the nut, which is driven in translation, is provided to accompany the brake pad (4) in its movement in order to be selectively pressed against a rotating surface of a vehicle to be braked, and moved away from this rotating surface.

11. The brake according to claim 10, wherein the electromechanical actuator (7) is configured to provide parking and/or emergency braking, and/or
wherein the electromechanical actuator (7) is configured to provide service braking.

12. The brake according to any one of claims 10 and 11, wherein the brake further comprises hydraulic means providing service braking.

13. A method for manufacturing a geared motor according to any one of claims 1 to 8 or a brake according to any one of claims 10 to 12, comprising a step of inserting the ring gear (19) into the shell (33), the tabs (39) being elastically deformed by the ring gear (19) so as to mutually clamp its outer surface (37) by an elastic return effect.

14. The method for manufacturing a geared motor according to the preceding claim, comprising insertion of the ring gear (19) into the shell (33) by force-fitting by radially compressing the tabs (39).
